# EUROPEAN PATENT SPECIFICATION

(11) **EP 3 956 206 B1**
(45) Date of publication and mention of the grant of the patent: **07.06.2023**
(21) Application number: 20716471.6
(22) Date of filing: 03.04.2020
(51) Int. Cl.: B62J 3/04, G10K 1/071

(54) **BICYCLE BELL**
FAHRRADKLINGEL
SONNETTE DE VÉLO

(30) Priority: 15.04.2019 DK PA201970237
(43) Date of publication of application: 23.02.2022
(73) Proprietor: Royal Danish Vendors A/S, 3400 Hillerød (DK)
(72) Inventor: BLAABJERG, Søren, 3400 Hillerød (DK); BLAABJERG, Tine, 3400 Hillerød (DK)
(74) Representative: Guardian IP Consulting I/S
(86) International application number: PCT/EP2020/059609
(87) International publication number: WO 2020/212174

(56) References cited:
- CH-A- 407 778
- CN-U- 204 452 687
- GB-A- 2 445 376
- JP-U- S5 397 983
- KR-U- 20170 001 070
- TW-U- M 387 048
- US-A- 5 307 756

## Description

The present invention relates to a bicycle bell including a bell body, a thumb-operated clapper or lever adapted to strike the bell body in order to produce a sound, a frame element holding the bell body and the thumb-operated clapper or lever, and a mounting mechanism carrying the frame element.

A well-known bicycle bell is provided with a mounting mechanism in the form of a bracket adapted to grip over and clamp about handlebars of a bike. However, this mounting mechanism is not suitable for mounting the bicycle bell on a flat surface, such as the surface of a refrigerator, for decoration purposes.

JP S5397983 discloses a well-known type of bicycle bell provided with a mounting mechanism in the form of a bracket adapted to grip over and clamp about handlebars of a bike. This document discloses the features of the preamble of claim 1.

GB 2 445 376 A discloses a bicycle bell having a mounting seat and a sound generating unit mounted replaceably thereon. Thereby, it is possible to replace the sound generating unit with another unit, such as a whistle. The mounting seat is adapted to be clamped on the handlebars of a bicycle by means of a clamping screw. Furthermore, the sound generating unit is mounted rotatably on the mounting seat for adjustment of the position of the knocking hammer.

The object of the present invention is to provide a bicycle bell suitable for stable mounting on a flat magnetic surface.

In view of this object, the mounting mechanism includes a mounting shoe having at least one abutment surface adapted to abut a flat surface of an object and a permanent magnet arranged in the mounting shoe, and the at least one abutment surface of the mounting shoe spans at least a distance corresponding to a third of a largest dimension of the bell body.

In this way, by providing a mounting shoe having a suitably broad abutment surface adapted to abut a flat surface and a permanent magnet, the bicycle bell may be steadily mounted on any flat metal surface or magnetic surface, such as the surface of a refrigerator or the like, and because of the steady mounting, which may prevent tipping of the bell in relation to the surface it is mounted on, the bicycle bell may furthermore be used to provide a sound by operating the thumb-operated clapper or lever to strike the bell in the same way as it is done with prior art bicycle bells when mounted on the handlebars of a bike.

The mounting shoe includes a ring-formed element forming the at least one abutment surface, and the permanent magnet is inserted into the ring-formed element flush with the at least one abutment surface of the mounting shoe. The permanent magnet may have the form of a disc and it may be glued into the ring-formed element.

The ring-formed element is produced from a metal plate in a stamping operation, and an inner edge of the ring-formed element is bent to conform to an edge of the permanent magnet. The permanent magnet may have the form of a disc and it may preferably be glued into the bent edge of the ring-formed element.

In an embodiment, the mounting shoe includes a conical element having a narrow top end and a wide bottom end, the conical element is produced from a metal plate in a stamping operation, and the frame element is attached to the narrow top end and the at least one abutment surface is arranged at the wide bottom end. Thereby, a stable mounting of the bicycle bell on a flat surface may be achieved in a simple manner.

In an embodiment, an outer edge of the ring-formed element is bent about an outer edge of the wide bottom end of the conical element. Thereby, a solid connection may be achieved between the ring-formed element and the conical element.

In an embodiment, the narrow top end of the conical element has a bent-in edge abutting a recess of a pin forming part of or forming the frame element.

In an embodiment, the mounting shoe includes a conical element having a narrow top end and a wide bottom end, and the frame element is attached to the narrow top end and the at least one abutment surface is arranged at the wide bottom end. Thereby, a stable mounting of the bicycle bell on a flat surface may be achieved in a simple manner.

In an embodiment, the bell body has a longitudinal axis arranged coaxially with the conical element, the bell body has a largest diameter, and the wide bottom end of the conical element has a diameter larger than 1/3, preferably larger than 1/2, of the largest diameter of the bell body. Thereby, an even more stable mounting of the bicycle bell on a flat surface may be achieved.

In an embodiment, the frame element has the form of a pin, a first end of which is attached to a centre of the bell body, and a second end of which is attached to narrow top end of the conical element.

In an embodiment, a thumb-operated clapper is spring-mounted to the pin forming the frame element.

The invention will now be explained in more detail below by means of examples of embodiments with reference to the very schematic drawing, in which
Fig. 1 is a perspective view of the bicycle bell according to the invention, seen from below;
Fig. 2 is a perspective view of the bicycle bell of Fig. 1, seen from above;

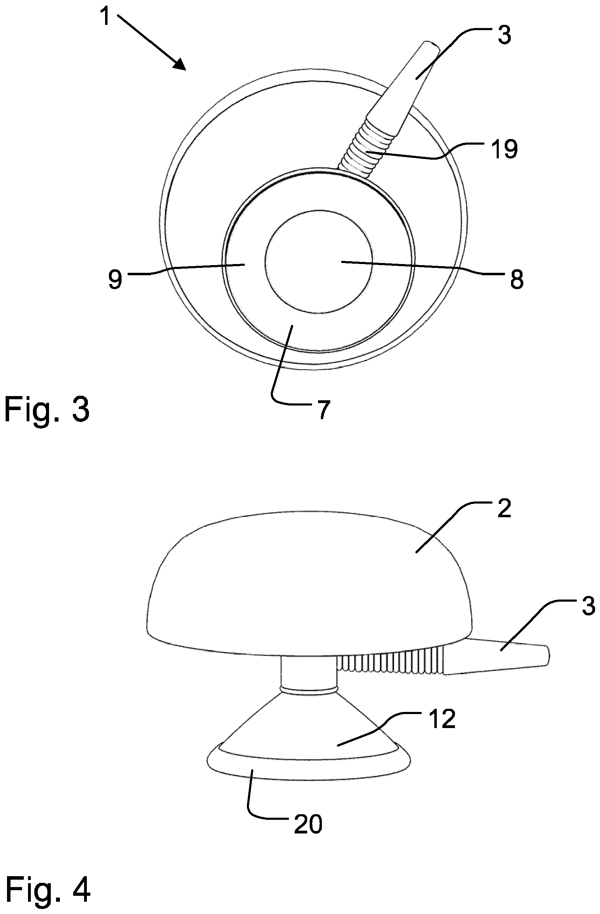

Fig. 3 is a perspective view of the bicycle bell of Fig. 1, seen from another angle from below;
Fig. 4 is a side view of the bicycle bell of Fig. 1;

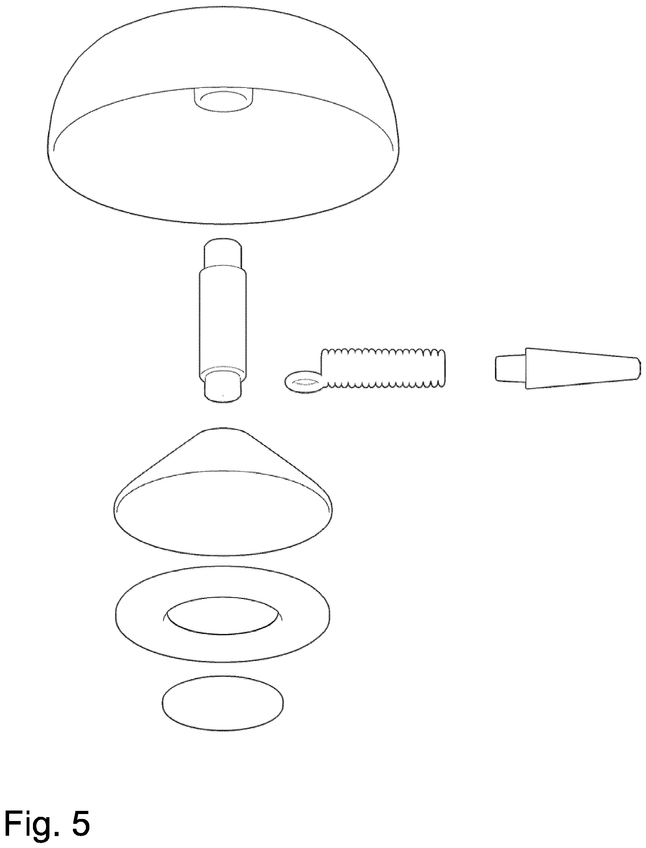

Fig. 5 is a perspective, exploded view of the bicycle bell according to the invention, seen from below;

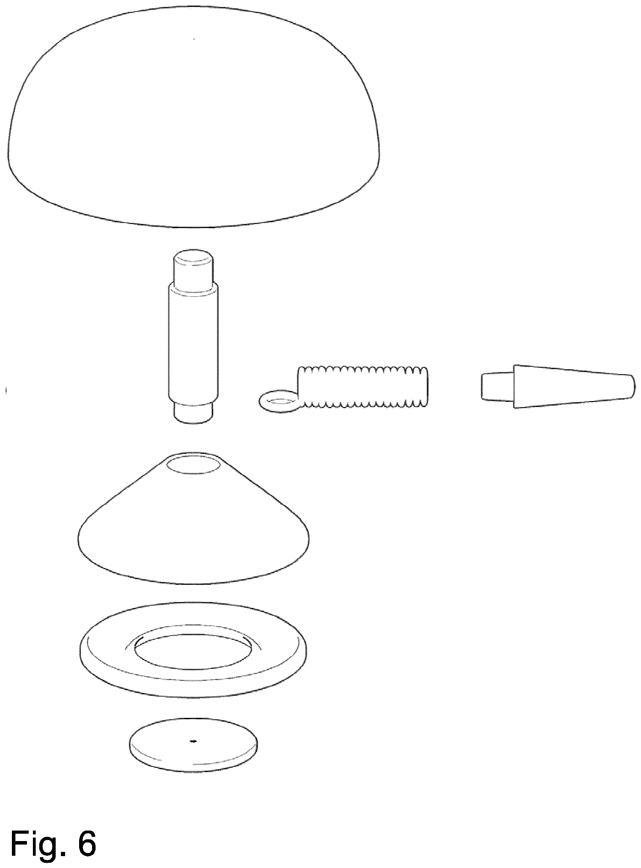

Fig. 6 is a perspective, exploded view corresponding to that of Fig. 5, seen from above; and
Fig. 7 is an exploded side view of the bicycle bell according to the invention.

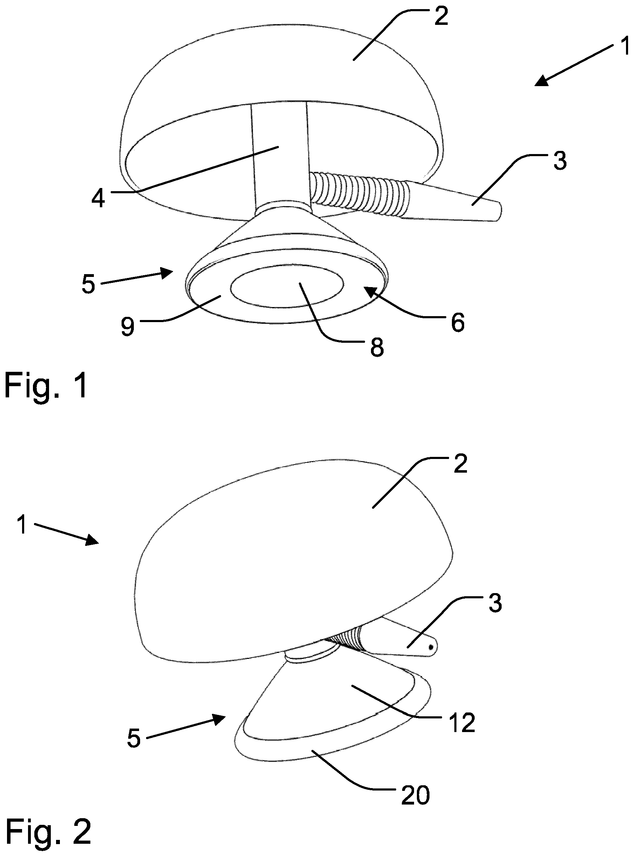

Fig. 1 shows a bicycle bell 1 including a bell body 2, a thumb-operated clapper 3 or lever adapted to strike the bell body 2 in order to produce a sound, a frame element 4 holding the bell body and the thumb-operated clapper or lever, and a mounting mechanism 5 carrying the frame element.

The illustrated bicycle bell 1 is of a quite simple type, with a spring-mounted external clapper that produces a "ding-ding" sound when the clapper is pulled with a finger and released. However, the present invention is equally applicable to other types of bells, such as the more traditional type, wherein the bell is actuated by a thumb-operated lever that is geared to rapidly rotate two loosely slung metal discs inside the bell housing. Said discs repeatedly rattle and strike the bell to produce a sound not unlike that of an electric bell. This known type of bell is mounted on handle bars of bicycles.

As seen in the figures, according to the present invention, the mounting mechanism 5 includes a mounting shoe 6 having at least one abutment surface 7 adapted to abut a flat surface of an object and a permanent magnet 8 arranged in the mounting shoe 6, and the at least one abutment surface 7 of the mounting shoe spans at least a distance d corresponding to a third of a largest dimension D of the bell body 2.

The mounting shoe 6 includes a ring-formed element 9 forming the at least one abutment surface 7, and the permanent magnet 8 is inserted into the ring-formed element 9 flush with the at least one abutment surface 7 of the mounting shoe.

The ring-formed element 9 is produced from a metal plate in a stamping operation, and an inner edge 10 of the ring-formed element is bent to conform to an edge 11 of the permanent magnet 8.

The mounting shoe 6 includes a conical element 12 having a narrow top end 13 and a wide bottom end 14. The conical element is produced from a metal plate in a stamping operation, and the frame element 4 is attached to the narrow top end 13 and the at least one abutment surface 7 is arranged at the wide bottom end 14.

An outer edge 20 of the ring-formed element 9 is bent about an outer edge of the wide bottom end 14 of the conical element 12. Thereby, a solid connection between the ring-formed element 9 and the conical element 12 may be achieved.

The narrow top end 13 of the conical element 12 has a bent-in edge 15 abutting a recess 16 of a pin forming part of or forming the frame element 4.

The mounting shoe 6 includes a conical element 12 having a narrow top end 13 and a wide bottom end 14, and the frame element 4 is attached to the narrow top end 13 and the at least one abutment surface 7 is arranged at the wide bottom end 14.

According to the invention, the bell body 2 has a longitudinal axis arranged coaxially with the conical element 12, the bell body has a largest diameter D, and the wide bottom end 14 of the conical element 12 has a diameter larger than 1/3, preferably larger than 1/2, of the largest diameter D of the bell body.

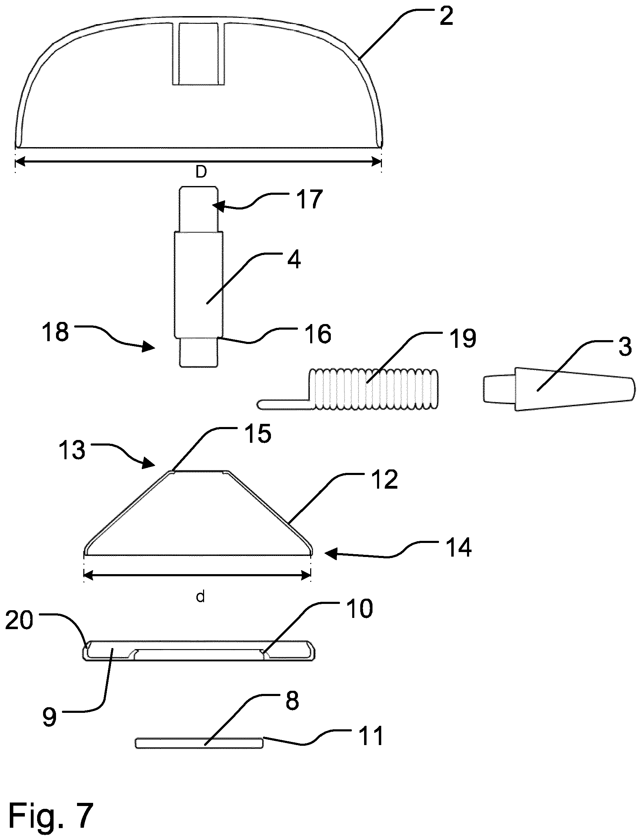

Referring to Fig. 7, in the illustrated embodiment, the wide bottom end 14 of the conical element 12 has a diameter d corresponding to approximately 0.6 times the largest diameter D of the bell body.

The frame element 4 has the form of a pin, a first end 17 of which is attached to a centre of the bell body, and a second end 18 of which is attached to narrow top end 13 of the conical element 12, preferably by means of a press fitting.

In the illustrated embodiment, the thumb-operated clapper 3 is spring-mounted 19 to the pin forming the frame element 4.

## Claims

1. A bicycle bell (1) including a bell body (2), a thumb-operated clapper (3) or lever adapted to strike the bell body (2) in order to produce a sound, a frame element (4) holding the bell body and the thumb-operated clapper or lever, a mounting mechanism (5) carrying the frame element, the mounting mechanism (5) including a mounting shoe (6) having at least one abutment surface (7) adapted to abut a flat surface of an object, the at least one abutment surface (7) of the mounting shoe spanning at least a distance (d) corresponding to a third of a largest dimension (D) of the bell body (2), the mounting shoe (6) including a ring-formed element (9) forming the at least one abutment surface (7), and the ring-formed element (9) being produced from a metal plate in a stamping operation, **characterised in that** a permanent magnet (8) is arranged in the mounting shoe (6), **in that** the permanent magnet (8) is inserted into the ring-formed element (9) flush with the at least one abutment surface (7) of the mounting shoe, and **in that** an inner edge (10) of the ring-formed element is bent to conform to an edge (11) of the permanent magnet (8).

2. A bicycle bell according to claim 1, wherein the mounting shoe (6) includes a conical element (12) having a narrow top end (13) and a wide bottom end (14), and wherein the frame element (4) is attached to the narrow top end (13) and the at least one abutment surface (7) is arranged at the wide bottom end (14).

3. A bicycle bell according to claim 1, wherein the mounting shoe (6) includes a conical element (12) having a narrow top end (13) and a wide bottom end (14), wherein the conical element is produced from a metal plate in a stamping operation, and wherein the frame element (4) is attached to the narrow top end (13) and the at least one abutment surface (7) is arranged at the wide bottom end (14).

4. A bicycle bell according to claim 3, wherein an outer edge (20) of the ring-formed element (9) is bent about an outer edge of the wide bottom end (14) of the conical element (12).

5. A bicycle bell according to claim 3 or 4, wherein the narrow top end (13) of the conical element (12) has a bent-in edge (15) abutting a recess (16) of a pin forming part of or forming the frame element (4).

6. A bicycle bell according to claim 2, wherein the bell body (2) has a longitudinal axis arranged coaxially with the conical element (12), wherein the bell body has a largest diameter (D), and wherein the wide bottom end (14) of the conical element (12) has a diameter larger than 1/3, preferably larger than 1/2, of the largest diameter (D) of the bell body.

7. A bicycle bell according to claim 2 or 6, wherein the frame element (4) has the form of a pin, a first end (17) of which is attached to a centre of the bell body, and a second end (18) of which is attached to the narrow top end (13) of the conical element (12).

8. A bicycle bell according to claim 7, wherein the thumb-operated clapper (3) is spring-mounted (19) to the pin forming the frame element (4).

## Patentansprüche

1. Fahrradklingel (1) einschließlich einem Klingelkörper (2), einem daumenbetätigten Klöppel (3) oder Hebel, der angepasst ist, den Klingelkörper (2) anzuschlagen, um einen Ton zu erzeugen, einem Rahmenelement (4), das den Klingelkörper und den daumenbetätigten Klöppel oder Hebel hält, einem Befestigungsmechanismus (5), der das Rahmenelement trägt, wobei der Befestigungsmechanismus (5) einen Befestigungsschuh (6) mit mindestens einer Anlagefläche (7) aufweist, die angepasst ist, an einer flachen Oberfläche eines Objekts anzuliegen, wobei die mindestens eine Anlagefläche (7) des Befestigungsschuhs mindestens einen Abstand (d) überspannt, der einem Drittel einer größten Abmessung (D) des Klingelkörpers (2) entspricht, wobei der Montageschuh (6) ein ringförmiges Element (9) aufweist, das die mindestens eine Anlagefläche (7) bildet, und wobei das ringförmige Element (9) in einem Stanzvorgang aus einem Blech hergestellt ist, **dadurch gekennzeichnet, dass** in dem Montageschuh (6) ein Permanentmagnet (8) angeordnet ist, dass der Dauermagnet (8) bündig mit der mindestens einen Anlagefläche (7) des Montageschuhs in das ringförmige Element (9) eingesetzt ist, und dass ein innerer Rand (10) des ringförmigen Elements entsprechend einem Rand (11) des Dauermagneten (8) gebogen ist.

2. Fahrradklingel nach Anspruch 1, wobei der Befestigungsschuh (6) ein konisches Element (12) einschließt, das mindestens ein schmales oberes Ende (13) und ein breites unteres Ende (14) aufweist, und wobei das Rahmenelement (4) an dem schmalen oberen Ende (13) angebracht ist und die mindestens eine Anschlagfläche (7) an dem breiten unteren Ende (14) angeordnet ist.

3. Fahrradklingel nach Anspruch 1, wobei der Befestigungsschuh (6) ein konisches Element (12) einschließt, das ein schmales oberes Ende (13) und ein breites unteres Ende (14) aufweist, wobei das konische Element in einem Stanzvorgang aus einer Metallplatte hergestellt wird, und wobei das Rahmenelement (4) an dem schmalen oberen Ende (13) angebracht ist und die mindestens eine Anschlagfläche (7) an dem breiten unteren Ende (14) angeordnet ist.

4. Fahrradklingel nach Anspruch 3, wobei eine Außenkante (20) des ringförmigen Elements (9) um eine Außenkante des breiten unteren Endes (14) des konischen Elements (12) gebogen ist.

5. Fahrradklingel nach Anspruch 3 oder 4, wobei das schmale obere Ende (13) des konischen Elements (12) eine eingebogene Kante (15) aufweist, die an einer Aussparung (16) eines Stifts anliegt, der Teil des Rahmenelements (4) ist oder dieses bildet.

6. Fahrradklingel nach Anspruch 2, wobei der Klingelkörper (2) eine koaxial zu dem konischen Element (12) angeordnete Längsachse aufweist, wobei der Klingelkörper einen größten Durchmesser (D) aufweist, und wobei das breite untere Ende (14) des konischen Elements (12) einen Durchmesser von mehr als 1/3, bevorzugt mehr als 1/2, des größten Durchmessers (D) des Klingelkörpers aufweist.

7. Fahrradklingel nach Anspruch 2 oder 6, wobei das Rahmenelement (4) die Form eines Stifts aufweist, dessen erstes Ende (17) an einem Zentrum des Klingelkörpers angebracht ist und dessen zweites Ende (18) am schmalen oberen Ende (13) des konischen Elements (12) angebracht ist.

8. Fahrradklingel nach Anspruch 7, **dadurch gekennzeichnet, dass** der daumenbetätigte Klöppel (3) an dem das Rahmenelement (4) bildenden Bolzen federnd gelagert ist (19).

## Revendications

1. Sonnette de bicyclette (1) incluant un corps de sonnette (2), un battant ou levier actionné par le pouce (3) adapté pour frapper le corps de sonnette (2) afin de produire un son, un élément de cadre (4) maintenant le corps de sonnette et le battant ou levier actionné par le pouce, un mécanisme de montage (5) portant l'élément de cadre, le mécanisme de montage (5) incluant un sabot de montage (6) ayant au moins une surface de butée (7) adaptée pour buter contre une surface plate d'un objet, l'au moins une surface de butée (7) du sabot de montage couvrant au moins une distance (d) correspondant à un tiers d'une dimension la plus grande (D) du corps de sonnette (2), le sabot de montage (6) incluant un élément annulaire (9) formant l'au moins une surface de butée (7), et l'élément annulaire (9) étant produit à partir d'une plaque métallique dans une opération d'estampage, **caractérisé en ce qu'**un aimant permanent (8) est agencé dans le sabot de montage (6), **en ce que** l'aimant permanent (8) est inséré dans l'élément annulaire (9) en alignement avec l'au moins une surface de butée (7) du sabot de montage, et **en ce qu'**une arête intérieure (10) de l'élément annulaire est pliée pour se conformer à une arête (11) de l'aimant permanent (8).

2. Sonnette de bicyclette selon la revendication 1, dans laquelle le sabot de montage (6) inclut un élément conique (12) ayant une extrémité supérieure étroite (13) et une extrémité inférieure large (14), et dans laquelle l'élément de cadre (4) est attaché à l'extrémité supérieure étroite (13) et l'au moins une surface de butée (7) est agencée au niveau de l'extrémité inférieure large (14).

3. Sonnette de bicyclette selon la revendication 1, dans laquelle le sabot de montage (6) inclut un élément conique (12) ayant une extrémité supérieure étroite (13) et une extrémité inférieure large (14), dans laquelle l'élément conique est produit à partir d'une plaque métallique dans une opération d'estampage, et dans laquelle l'élément de cadre (4) est attaché à l'extrémité supérieure étroite (13) et l'au moins une surface de butée (7) est agencée au niveau de l'extrémité inférieure large (14).

4. Sonnette de bicyclette selon la revendication 3, dans laquelle une arête extérieure (20) de l'élément annulaire (9) est pliée autour d'une arête extérieure de l'extrémité inférieure large (14) de l'élément conique (12).

5. Sonnette de bicyclette selon la revendication 3 ou 4, dans laquelle l'extrémité supérieure étroite (13) de l'élément conique (12) présente une arête pliée (15) butant contre un évidement (16) d'un axe formant une partie de ou formant l'élément de cadre (4).

6. Sonnette de bicyclette selon la revendication 2, dans laquelle le corps de sonnette (2) présente un axe longitudinal agencé coaxialement avec l'élément conique (12), dans laquelle le corps de sonnette présente un diamètre le plus grand (D), et dans lequel l'extrémité inférieure large (14) de l'élément conique (12) présente un diamètre supérieur à 1/3, de préférence supérieur à 1/2, du diamètre le plus grand (D) du corps de sonnette.

7. Sonnette de bicyclette selon la revendication 2 ou 6, dans laquelle l'élément de cadre (4) présente la forme d'un axe, dont une première extrémité (17) est attachée à un centre du corps de sonnette, et une seconde extrémité (18) est attachée à l'extrémité supérieure étroite (13) de l'élément conique (12).

8. Sonnette de bicyclette selon la revendication 7, dans laquelle le battant actionné par le pouce (3) est monté sur ressort (19) sur l'axe formant l'élément de cadre (4).
